# DEMANDE DE BREVET EUROPEEN

(11) **EP 2 015 584 A2**
(43) Date de publication de la demande: **14.01.2009**
(21) Numéro de dépôt: 08157691.0
(22) Date de dépôt: 05.06.2008
(51) Int. Cl.: H04N 7/26, H04N 7/36, H04N 7/50

(54) **Système et procédé de codage vidéo**

(30) Priorité: 08.06.2007 FR 0755620
(71) Demandeur: SAGEM Communication, 75015 Paris (FR)
(72) Inventeur: Morard, Jean-Pierre, 75015 Paris (FR); Bardoux, Gilles, 14000 Caen (FR)
(74) Mandataire: Lebkiri, Alexandre

(57) **Abrégé**

La présente invention concerne un système et un procédé de codage vidéo. L'invention s'applique au domaine de la diffusion de données vidéo par un serveur vers un terminal client. Le système 100 selon l'invention est un système de codage vidéo pour le codage d'images successives d'une séquence vidéo, le codage d'au moins une image courante Fₙ étant opéré relativement à au moins une image précédente et/ou postérieure Fₙ₋₁ de la séquence vidéo. Le système 100 de codage comporte un module 101 de réception de données d'entrées pour la réception de l'image courante Fₙ à coder, des moyens 103 pour diviser l'image courante Fₙ en macroblocs et un module 105 d'estimation de vecteurs de mouvement en fonction des macroblocs de Fₙ et de Fₙ₋₁. Le module 101 de réception de données reçoit en outre une information de localisation et de dimension (x, y, l, h) d'au moins une zone modifiée de Fₙ, le système 100 de codage comportant des moyens 104 pour transmettre uniquement les macroblocs appartenant à la zone modifiée vers le module (105) d'estimation.

## Description

### Domaine technique de l'invention

La présente invention concerne un système de codage vidéo. Elle a également pour objet un procédé de codage vidéo. L'invention s'applique au domaine de la diffusion de données vidéo par un serveur vers un terminal client. Le serveur, généralement un ordinateur, est relié au terminal client, par exemple un décodeur vidéo, par un réseau, par exemple sous forme HDMI (« High Definition Multimedia Interface » en anglais), WIFI ou ether-net. L'écran de l'ordinateur peut alors être affiché par le terminal client sur un écran de télévision selon un protocole de type « Remote Frame Buffer », par exemple VNC (« Virtual Network Computing » en anglais).

### Arrière-plan technologique de l'invention

Dans une telle architecture, le serveur encode, c'est-à-dire compresse, ce qu'il diffuse avant de l'envoyer au terminal client. Si le serveur avait à afficher sur un écran qui lui est propre les images qu'il diffuse, il ne lui serait pas nécessaire de les compresser. Pour compresser, le serveur effectue une capture de son propre affichage, l'encode et l'envoie via le réseau au terminal client. Chaque image à afficher est stocké dans une mémoire tampon dite « framebuffer » du serveur et est généralement codée en format RGB (« Red Green Blue » en anglais) qui constitue la manière la plus directe de coder les images, les trois plans correspondant aux trois couleurs élémentaires rouge, vert et bleu. L'image est ensuite généralement transformée dans un format YUV (ou luminance - chrominance). Le premier plan, appelé plan de luminance (Y) représente l'intensité lumineuse des pixels. Les deux plans suivants correspondent à la chrominance (U,V) et portent l'information de couleur. Il existe essentiellement deux formats YUV :
- le format 4 :2 :0 (dit également YUV12) pour lequel les deux plans de chrominance contiennent chacun un échantillon pour quatre pixels,
- le format 4 :4 :4 pour lequel les trois plans ont la même taille (i.e. il y a un échantillon de chrominance par pixel).

L'encodage effectué par le serveur est un encodage du type spatio-temporel tel que H264. La norme H264 est une norme de codage vidéo développée conjointement par le VCEG (« Vidéo Coding Experts Group ») et le MPEG (« Moving Pictures Experts Group »). Cette norme permet d'encoder des flux vidéo avec un débit inférieur à deux fois moins que celui obtenu par la norme MPEG2 pour la même qualité. Un encodage spatio-temporel n'encode intégralement qu'une partie des images à transmettre afin de reconstituer une vidéo. On retrouve dans la norme H264 les types d'image connus et définis dans la norme MPEG2, à savoir :
- les images I (Intra) dont le codage ne dépend d'aucune autre image,
- les images P (Prédictives) dont le codage dépend d'images reçues précédemment,
- les images B (Bi-prédictives) qui dépendent d'images reçues précédemment et/ou postérieurement.

Toutefois, la mise en oeuvre d'une telle solution d'encodage pose un certain nombre de difficultés lorsqu'il s'agit de déporter en temps réel l'affichage du serveur sur le terminal client.

Ainsi, un tel mode de codage est très couteux en temps et en moyens de calculs. Pour économiser de la bande passante, les données doivent être compressées le plus possible. Cette compression importante impose une grande complexité dans l'encodage. Ainsi, le serveur doit non seulement effectuer une compression d'image mais doit effectuer de nombreux calculs pour déterminer les adresses et les données à encoder. Cette surconsommation d'énergie rend délicate la mise en oeuvre d'autres applications fonctionnant sur le même serveur.

### Description générale de l'invention

Dans ce contexte, la présente invention vise à fournir un système de codage vidéo spatio-temporel permettant de réduire l'effort d'encodage en vue d'une utilisation suivant un protocole client serveur en temps réel tout en laissant suffisamment de ressources sur le serveur en charge de l'encodage pour faire tourner d'autres applications.

A cette fin, l'invention propose un système de codage vidéo pour le codage d'images successives d'une séquence vidéo, le codage d'au moins une image courante étant opéré relativement à au moins une image précédente et/ou postérieure de ladite séquence vidéo, ledit système de codage comportant :
- un module de réception de données d'entrée pour la réception de ladite image courante à coder,
- des moyens pour diviser ladite image courante en macroblocs,
- un module d'estimation de vecteur de mouvement en fonction des macroblocs de ladite image courante et de ladite au moins une image précédente et/ou postérieure,
ledit système de codage étant caractérisé en ce que ledit module de réception de données reçoit en outre une information de localisation et de dimension d'au moins une zone modifiée de ladite image courante, ledit système de codage comportant des moyens pour transmettre uniquement les macroblocs appartenant à ladite zone modifiée vers ledit module d'estimation.

On désigne par le terme macrobloc, une région élémentaire rectangulaire de l'image ayant une taille comprise entre 4x4 et 16x16 pixels (en passant par 8x16, 8x8,...). Chaque macrobloc est lui-même constitué de blocs de luminance et de blocs de chrominance.

Grâce à l'invention, la fourniture d'informations relatives aux zones modifiées permet de ne pas recalculer les vecteurs de mouvement dans les macroblocs qui ne sont pas touchés par l'une des zones modifiées.

Ainsi, l'effort d'encodage est notablement réduit par rapport à un encodage spatio-temporel classique.

Le dispositif selon l'invention peut également présenter une ou plusieurs des caractéristiques ci-dessous, considérées individuellement ou selon toutes les combinaisons techniquement possibles.

Selon un mode réalisation préférentiel, le système de codage vidéo selon l'invention comporte :
- un module de compensation de mouvement recevant les vecteurs de mouvement issus du module d'estimation et fournissant au moins une zone prédite,
- un soustracteur pour effectuer la différence entre les pixels de la zone modifiée de l'image courante et la zone prédite et fournissant une erreur résiduelle correspondant à cette différence,
- un module de transformée fréquentielle appliquant une transformée fréquentielle sur chaque macrobloc traité par ledit module d'estimation ainsi que sur l'erreur résiduelle,
- un module de quantification des données issues du module de transformée fréquentielle,
- un module de fusion réalisant le regroupement des données issues du module de quantification et des données relatives aux zones non modifiées,
- un codeur entropique pour le codage des données issues du module de fusion.

La présente invention a également pour objet un procédé de codage vidéo pour le codage d'images successives d'une séquence vidéo, le codage d'au moins une image courante étant opéré relativement à au moins une image précédente et/ou postérieure de la séquence vidéo, ledit procédé comportant les étapes suivantes :
- réception de l'image courante à coder et d'une information de localisation et de dimension d'au moins une zone modifiée de ladite image courante,
- division de l'image courante en macroblocs,
- estimation de vecteurs de mouvement en fonction des macroblocs de l'image courante et de l'image précédente et/ou postérieure, l'estimation se faisant uniquement à partir des macroblocs appartenant à la zone modifiée.

Avantageusement, la zone modifiée est une zone rectangulaire, l'information de localisation et de dimension de la zone modifiée étant un quadruplet comportant l'abscisse et l'ordonnée d'un point de ladite zone modifiée ainsi que la largeur et la hauteur de ladite zone modifiée.

Selon un mode de réalisation préférentiel, l'image courante à coder est transmise d'un serveur vers un terminal client tel qu'un décodeur vidéo, le codage étant effectué au niveau du serveur.

Selon un mode de réalisation particulièrement avantageux, l'information de localisation et de dimension d'au moins une zone modifiée de l'image courante est fournie par une interface de programmation de l'environnement graphique du serveur.

Avantageusement, l'interface de programmation est une interface de programmation d'un système d'exploitation WindowsⓇ du type Win32 ou sous Unix de type WINE (API compatible Win32) ou plus fréquemment sous Unix de type XWindow (par exemple : XFree86®).

Avantageusement, l'image courante ainsi que l'information de localisation et de dimension de la zone modifiée sont initialement codées dans un format RGB puis subissent une transformation dans un format YUV.

### Brève description des figures

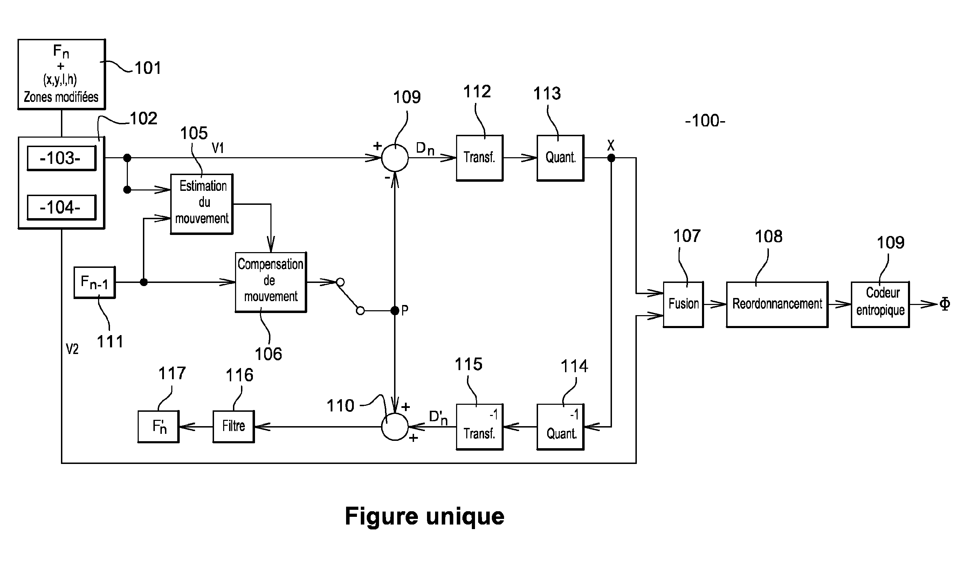

D'autres caractéristiques et avantages de l'invention ressortiront clairement de la description qui en est donnée ci-dessous, à titre indicatif et nullement limitatif, en référence à la figure 1 annexée qui est une représentation schématique simplifiée d'un système de codage selon l'invention pour la mise en oeuvre du procédé de codage selon l'invention.

### Description des formes de réalisation préférées de l'invention

La figure 1 représente un système de codage 100 selon l'invention. Le système de codage 100 comporte :
- un module 101 de réception de données d'entrées,
- un module 102 de traitement des données d'entrées,
- un module 105 d'estimation de mouvement (également appelé par la suite module d'estimation de vecteurs de mouvement),
- un module 106 de compensation de mouvement,
- un soustracteur 109 et un additionneur 110,
- un module de transformée fréquentielle 112 et un module de transformée fréquentielle inverse 115,
- un module de quantification 113 et un module de quantification inverse 14,
- un filtre 116,
- une mémoire tampon 111,
- un module de fusion 107,
- un module de reordonnancement 108,
- un codeur entropique 109.

Le module de réception 101 reçoit en entrée une image prédictive Fₙ. Fₙ correspond à l'image courante de l'écran du serveur dans sa totalité. On notera que l'invention concerne uniquement le codage des images prédictives, le codage intra-prédictif des images I continuant à se faire selon des techniques connus. Ainsi, pour rendre le schéma plus clair, les moyens nécessaires au codage intra-prédictif ont été volontairement omis.

L'image Fₙ se présente généralement dans un format YUV12 après avoir subi une transformation RGB - YUV.

Le module de réception 101 reçoit également en entrée des informations de localisation et de dimension sur les zones ayant changé dans l'image Fₙ. La zone modifiée est une zone rectangulaire généralement représentée par un quadruplet (x, y, l, h) : x et y représentent respectivement l'abscisse et l'ordonnée du point en haut à gauche de la zone, I représente la largeur du rectangle et h est la hauteur dudit rectangle. Ces informations peuvent être obtenues par le serveur via les interfaces de programmation de son environnement graphique, dites aussi API (Application Programming Interface) pour interface utilisateur graphique (ou GUI « Graphical User Interface »): il peut s'agir par exemple des interfaces de programmation de fenêtrage pour WindowsⓇ du type Win32. En d'autres termes, le serveur et le terminal client fonctionnant en application VNC, l'application VNC est informée des changements de l'image Fₙ via des API de fenêtrage. Ces données (x, y, I, h) codées en format RGB sont également transformées en format YUV12.

Le module 102 de traitement des données d'entrée comporte :
- des moyens 103 pour diviser l'image courante Fₙ en macroblocs,
- des moyens 104 pour transmettre uniquement les macroblocs appartenant à une zone modifiée vers le module d'estimation de mouvement 105.

Ainsi, chaque image courante Fₙ à encoder est divisée par les moyens 103 en macroblocs correspondant à une région élémentaire rectangulaire de l'image ayant une taille variable comprise entre 4x4 et 16x16 pixels (en passant par 8x16, 8x8,...).

Les moyens 104 connaissant les zones modifiées de l'image Fₙ (définies par un quadruplet (x, y, l, h)) permettent de distinguer les macroblocs appartenant à une zone modifiée de ceux n'appartenant pas à une zone modifiée. Dès lors, les moyens 104 vont orienter uniquement les macroblocs touchés par une zone modifiée selon la voie V1 vers le module d'estimation de mouvement 105, le reste des macroblocs étant transmis directement au module de fusion 107 via la voie V2.

La fonction du module 105 d'estimation de mouvement est de retrouver un macrobloc de l'image courante Fₙ dans au moins une image Fₙ₋₁ précédente de l'écran du serveur dans sa totalité (il pourrait également s'agir d'une image postérieure dans le cas d'une image B et même d'une pluralité d'images antérieures et/ou postérieures). Lorsque l'on trouve une partie d'une image précédente qui ressemble (selon des critères de moindres carrés par exemple) au macrobloc, on en déduit un vecteur de mouvement qui correspond à la différence entre la position de la région sélectionnée et celle du macrobloc.

Les vecteurs de mouvement qui ont été retenus par le module d'estimation sont transmis vers le module 106 de compensation de mouvement. On obtient alors une erreur de prédiction due au fait qu la région retenue dans l'image passée n'est pas exactement égale au macrobloc analysé. On obtient en sortie du module de compensation de mouvement 106 un ensemble de « zones prédites » P (dans l'encodage H264 connu, on obtenait une image prédite mais, selon l'invention, la prédiction ne se fait que sur les zones modifiées).

Le soustracteur 109 calcule ensuite une erreur résiduelle Dₙ entre les pixels des zones modifiées dans Fₙ et l'ensemble de « zones prédites » P.

Les zones non traitées par le module 105 d'estimation de mouvement (car non modifiées) et envoyées directement vers le module de fusion 107 sont considérés comme ayant un vecteur de mouvement et une erreur résiduelle nuls. Grâce à l'invention, on sait sans aucun traitement, le résultat de l'encodage pour les macroblocs situés dans les zones non modifiées.

On applique une transformée fréquentielle (du type transformée en cosinus discrète DCT « Discrete Cosine Transform » ou transformée d'Hadamard) via le module de transformée fréquentielle 112 sur chaque macrobloc ayant subi une estimation de mouvement ainsi que sur l'erreur résiduelle Dₙ. Cette transformée permet d'avoir une représentation fréquentielle des zones modifiées.

Les données issues du module de transformée fréquentielle 112 sont ensuite quantifiées (i.e. codées sur un nombre limité de bits) par le module de quantification 113 pour fournir des paramètres transformés et quantifiés X. La fonction du module de quantification 113 est de définir des pas de quantification différents selon que certaines composantes seront jugées ou non significatives visuellement ; ces pas de quantification sont définis dans une table de pas de quantification.

Le module 114 de quantification inverse récupère les paramètres transformés et quantifiés X qui traversent ensuite le module 115 de transformée fréquentielle inverse qui opère une transformée fréquentielle inverse pour récupérer une version quantifiée D'ₙ de l'erreur résiduelle Dₙ ; cette version quantifiée D'ₙ est alors ajoutée aux macroblocs de l'ensemble de « zones prédites » P par l'additionneur 110 ; l'image en sortie de l'additionneur 110 est alors traitée par le filtre de déblocage pour fournir une image reconstruite F'ₙ correspondant à un ensemble de zones reconstruites ayant la même position, la même largeur et la même hauteur que les zones modifiées. F'ₙ est utilisée en interne par le décodeur 100 pour estimer la qualité de l'encodage.

Le module de fusion 107 réalise la fusion des paramètres X issus de l'encodage pour les macroblocs situés dans les zones modifiés avec le résultat de l'encodage pour les macroblocs situés dans les zones non modifiées (erreur résiduelle et vecteurs de mouvement nuls).

Les résultats sont alors réordonnés par le module de reordonnancement 108 pour grouper ensemble les coefficients non nuls de façon à permettre une représentation efficace des autres coefficients ayant une valeur nulle.

Les données subissent alors une dernière phase de compression de codage entropique via le codeur entropique 109. La fonction du codeur entropique est de réencoder différemment les données afin de diminuer le nombre de bits nécessaires à leur encodage en s'approchant le plus possible du minimum de bits théoriques (qui est fixé par l'entropie).

Le codeur entropique 109 construit un flux de sortie φ dans un format NAL (« Network Abstraction Layer » en anglais) définie pour permettre l'usage de la même syntaxe vidéo dans de nombreux environnements réseau.

On notera que les moyens et modules décrits ci-dessus peuvent être soit logiciels soit réalisés avec des circuits électroniques spécifiques.

Bien entendu, l'invention n'est pas limitée au mode de réalisation qui vient d'être décrit.

Notamment, l'invention a été plus particulièrement décrite dans le cadre du codage H264 mais elle s'applique à tout type de codage spatio-temporel : c'est par exemple le cas du codage MPEG2 ou du codage VC1 (norme de compression vidéo du SMPTE « Society of Motion Picture and Television Engineers).

En outre, nous avons cité à titre d'illustration d'interface de programmation API pour la fourniture des zones modifiées, l'application Win32. On peut utiliser d'autre type d'interface de programmation d'environnement graphique telle que XFree86® pour XWindow par exemple. Ces API permettent entre autre, de connaître les parties de la zone d'affichage nécessaire et suffisante pour remettre à jour la totalité de la zone d'affichage.

Enfin, on pourra remplacer tout moyen par un moyen équivalent

## Revendications

1. Procédé de codage vidéo pour le codage d'images successives d'une séquence vidéo, le codage d'au moins une image courante (Fₙ) étant opéré relativement à au moins une image précédente et/ou postérieure (Fₙ₋₁) de ladite séquence vidéo, ledit procédé comportant les étapes suivantes :
- réception de ladite image courante (Fₙ) à coder et d'une information de localisation et de dimension (x, y, I, h) d'au moins une zone modifiée de ladite image courante (Fₙ),
- division de ladite image courante en macroblocs,
- estimation de vecteurs de mouvement en fonction des macroblocs de ladite image courante et de ladite au moins une image précédente et/ou postérieure, ladite estimation se faisant uniquement à partir des macroblocs appartenant à ladite zone modifiée,
- attribution d'un vecteur de mouvement nul aux macroblocs situés dans les zones non modifiées,
ladite image courante à coder étant transmise d'un serveur vers un terminal client, le codage étant effectué au niveau du serveur et ladite information de localisation et de dimension d'au moins une zone modifiée de ladite image courante étant fournie par une interface de programmation de l'environnement graphique dudit serveur.

2. Procédé selon la revendication 1 **caractérisé en ce que** ladite zone modifiée est une zone rectangulaire, ladite information de localisation et de dimension de ladite zone modifiée étant un quadruplet comportant l'abscisse et l'ordonnée d'un point de ladite zone modifiée ainsi que la largeur et la hauteur de ladite zone modifiée.

3. Procédé selon l'une des revendications précédentes **caractérisé en ce que** ledit terminal client est un décodeur vidéo.

4. Procédé selon l'une des revendications précédentes **caractérisé en ce que** ladite interface de programmation est une interface de programmation d'un système d'exploitation WindowsⓇ du type Win32 ou sous Unix de type WINE ou sous Unix de type XWindow tel que XFree86®.

5. Procédé selon l'une des revendications précédente **caractérisé en ce que** ladite image courante ainsi que ladite information de localisation et de dimension d'au moins une zone modifiée sont initialement codées dans un format RGB puis subissent une transformation dans un format YUV.
